# EUROPEAN PATENT SPECIFICATION

(11) **EP 4 691 677 B1**
(45) Date of publication and mention of the grant of the patent: **02.12.2026**
(21) Application number: 25192508.7
(22) Date of filing: 29.07.2025
(51) Int. Cl.: B23D 59/00, B26D 5/00, G05B 19/409, G05B 19/4097, B27B 5/065

(54) **METHOD AND MACHINE TOOL FOR CUTTING**
VERFAHREN UND WERKZEUGMASCHINE ZUM SCHNEIDEN
PROCÉDÉ ET MACHINE-OUTIL POUR LA COUPE

(30) Priority: 05.08.2024 IT 202400018409
(43) Date of publication of application: 11.02.2026
(73) Proprietor: SCM Group S.p.A., 47921 Rimini (RN) (IT)
(72) Inventor: ROVIS, Stefano, 47921 Bologna - Italy (IT); MARCHETTI, Paolo, 47921 Bologna - Italy (IT); PLACUZZI, Andrea, 47921 Bologna - Italy (IT); ERCOLESSI, Federico, 47921 Bologna - Italy (IT)
(74) Representative: Gallo, Gianluca

(56) References cited:
- EP-A1- 4 032 671

## Description

This invention relates to a method for cutting at least one piece or a pack of pieces which can be operated by means of a machine tool, in particular a panel saw machine. Moreover, this invention relates to a machine for cutting at least one piece or a pack of pieces, in particular a panel saw machine, configured to perform the above-mentioned cutting method.

The term "piece" means a semi-finished product which may be made of a material such as wood, plastic, glass, fibreglass, ceramic or metal. The pieces can adopt various shapes and types according to the production requirements and specific applications.

In accordance with a preferred, non-limiting embodiment of the method, the pieces are panels or boards made of wood. Also, the packs of pieces are groups of panels or boards made of wood, in particular stacks of wooden panels or boards.

In the sector relevant to this invention, there are prior art machines for cutting pieces made of wood, in particular panel saw machines, which comprise at least one processing station for cutting the pieces in a cutting direction. Usually, a panel saw machine comprises a station for loading a piece (or panel), or a pack of pieces (or panels), a processing station and an outfeed or unloading station, usually provided with a surface, from which the pieces processed are picked up by an operator or by a mechanical arm. The pieces are usually moved by means of a movement unit from the loading station to the processing station.

The panels, or pieces, are then cut using a processing unit, in particular a disc blade, which slides along a cutting direction. The cutting operations are repeated until all the predetermined pieces have been obtained, starting from the initial panels, according to a predetermined cutting pattern. The term "cutting pattern" is used to mean the distribution of the shapes to be obtained inside the panel, or the pack of panels. After a cutting pattern has been created, for its execution it is converted into a series of steps (part program) that can be performed by a Programmable Logic Controller (PLC) of the machine. This part program sequence can be called "code" of the cutting pattern. The "code" bears all the information on the manner in which the cutting pattern is executed in the machine, and it is the element on which action is taken so that the cutting pattern can be executed in a different manner from that initially established. Hereafter, reference is always made to the cutting pattern with reference to the cutting pattern or, in particular, to the code of the cutting pattern. The cutting steps may be alternated with manual steps wherein an operator picks up the cut pieces from the loading station and inserts them again in the loading station or directly in the proximity of the processing station. The Applicant has observed that, although widely used, the above-mentioned system has drawbacks which make the use not free of drawbacks. In particular, the above-mentioned system has a significant problem linked to the manual management of the cut pieces. This problem is strictly linked to the fact that the machines follow preset cutting patterns, generated as a function of optimisation criteria such as, for example, nesting, operating time, wear of the cutting unit, the structural features of the material to be cut, the minimisation of vibrations and/or energy efficiency. However, once the cutting pattern has been defined, the operator is obliged to follow it scrupulously. This means that, after each cutting step, the pieces of wood must often be repositioned and oriented manually to adapt to the successive steps of the cutting pattern. Performing these operations can be extremely difficult for an operator, due to the weight and the dimensions of the pieces or packs of pieces of wood. Manually moving and repositioning heavy and bulky pieces or packs of pieces not only requires considerable physical effort, but also carries a high risk of fatigue and injury. These laborious and complicated operations increase the risk of error and slow down the entire production process.

In this context, the technical purpose of this invention is therefore to provide a method and a machine tool for cutting at least one piece or a pack of pieces, which are free of the drawbacks of the prior art.

EP4032671A1 discloses a method according to the preamble of appended claim 1 and a machine tool according to the preamble of appended claim 15.

The aim of this invention is therefore to provide a method and a machine tool for cutting at least one piece or a pack of pieces which are able to make the manual operations performed by the operators simpler and less onerous, reducing the physical effort and the risk of fatigue and injuries.

A further aim of this invention is to provide a method and a machine tool for cutting at least one piece or a pack of pieces which are able to make the process versatile, allowing it to be adapted to the specific requirements of the individual operators, improving the ergonomics and the efficiency of the manual operations.

The technical purpose indicated and the aims specified are substantially achieved by a method comprising the combination of features of appended claim 1 and by a machine tool comprising the combination of features of appended claim 15.

This type of machine tool basically comprises at least one loading station and at least one unloading station for the at least one piece or a pack of pieces, a processing station, a unit for moving the at least one piece or a pack of pieces, a control logic unit and a user interface.

The at least one station for loading the piece is the station of the machine into which the pieces or the packs of pieces which must be processed are introduced. This station is designed for initially receiving and positioning the material to be processed before the cutting process starts.

The at least one loading station may be made in different shapes depending on the specifications of the application and the production preferences. According to an embodiment, the at least one loading station may comprise a loading surface on which to manually position the pieces to be cut. Moreover, the at least one loading station may also comprise alignment or positioning devices to guarantee that the pieces or packs of pieces are correctly oriented and ready for the processing process.

The at least one unloading station is the station of the machine in which the semi-finished items made are unloaded, for picking up. The at least one unloading station may be made in different shapes depending on the specifications of the application and the production preferences.

The at least one unloading station may also be used as a loading station for the pieces to be reinserted in the machine tool for executing further cuts. According to an embodiment, the semi-finished items which must be subjected to machining are arranged on a supporting surface of the at least one loading station and feed onto the supporting surface along a feed direction, until reaching the machining station, by means of a thrust exerted by one or more movement units, such as pushers, each of which may comprise one or more gripping and pushing elements, such as, for example, grippers for gripping and moving the piece to be processed. The processing station comprises a work surface, for resting at least one piece or a pack of pieces, and a cutting unit movable along a cutting line at right angles to a feed direction, for cutting the at least one piece or a pack of pieces according to a generated cutting pattern.

According to an embodiment, the cutting unit may comprise a carriage movable along the cutting line and at least one disc blade, which protrudes from the work surface, for cutting the part or pack of pieces, by means of a slot, made on the work surface. The cutting unit may be further movable along a vertical direction to move the at least one disc blade between an operating position wherein the disc blade comes out from the work surface by means of the slot, and a rest position wherein the disc blade is below the work surface.

The movement unit is configured for moving the at least one piece or a pack of pieces along the above-mentioned feed direction, towards and/or away from the processing station.

According to an example embodiment, the movement unit may, for example, comprise at least one beam supported by a supporting frame, movable on the supporting frame along the feed direction, and a plurality of grippers for gripping and moving the piece or pack of pieces.

The logic control unit is configured for controlling the cutting unit and the movement unit. In other words, the logic control unit is able to control the movement of the one or more movement units, of the cutting unit, and, if necessary, the at least one loading station and the at least one unloading station, so as to execute a predetermined cutting pattern.

The logic control unit is also configured for generating a cutting pattern to be executed on the at least one piece or a pack of pieces.

The logic control unit may be made in the form of a programmable logic controller (PLC), an industrial computer, a microcontroller, an embedded system, or a CNC controller. These systems may be selected according to the technical requirements and specifications of the cutting process.

The logic control unit may also be any type of mobile electronic device, including a smartphone, a tablet, a laptop computer or the like.

The logic control unit may be configured for being connected to a remote IT infrastructure, such as, for example, "cloud computing", for transmitting information. In other words, the logic control unit may be configured for sending and receiving identification signals of the cutting process and/or identification signals of operation of the machine tool. For this purpose, the control logic unit may comprise a reception and transmission module in wireless mode.

The user interface, connected to the control logic unit, is equipped with a display device and a device for manually entering information. The user interface may adopt different embodiments depending on the specific needs and the technologies used.

According to an embodiment, the interface unit may be implemented as a modern touch-screen panel mounted directly on the machine or on a separate device, allowing the operators to select work options, start and stop the cutting process, and monitor the operating status by means of direct touches on the display. Other approaches can include a physical control console equipped with keys, knobs, and light indicators for more traditional but equally effective management. The user interface may be integral with the logic control unit.

The method according to this invention comprises a step of generating a cutting pattern to be executed on the at least one piece or a pack of pieces using the logic control unit. In particular, the cutting pattern defines a sequence of operating steps comprising at least one automated step, which can be executed by the movement unit and/or the cutting unit and at least one manual step, which can be executed by an operator. The method comprises a step of executing the cutting pattern by means of the operator, the movement unit and/or the cutting unit.

In accordance with the invention, the cutting pattern is generated as a function of a step of selecting a preferred execution method of the at least one manual step among two or more possible methods of executing the at least one manual step proposed by the logic control unit to the operator by means of the display device: the selection is performed by means of the device for manually entering information.

In other words, the cutting pattern is generated by the control unit as a function of a selecting step wherein the operator can select how he/she prefers to execute at least one of the manual operations. Functionally, the logic control unit for the machine offers the operator various options for executing these manual operations, using the device for displaying the user interface device. The operator then selects the preferred option by means of the device to manually enter the information.

The Applicant has found that this approach allows improved adaptability and customisation of the cutting process according to the preferences and skills of the operator.

Firstly, this technical feature improves the ergonomics and the safety of the manual steps. In fact, allowing the operator to select the method for executing the manual operations which he/she considers most suitable reduces the physical effort and the risk of injury. This helps to make the process less onerous for the operator, improving the safety at the workplace.

Secondly, this technical feature improves the efficiency of the process. The ability of the operator to select the method of executing manual operations may reduce the overall time of execution of the process. For example, if the operator has a particular preference or skill in a certain method for handling pieces, he/she may execute these operations more quickly and effectively.

Further, this technical feature increases the operating flexibility of the process. The possibility of selecting between different methods for executing manual operations makes the process more flexible. This means that the machine can be adapted in a more precise manner to the specific needs at the time, thereby improving the capacity to manage the needs of the operator.

In short, the Applicant has found that allowing the operator to select how to execute the manual operations within the cutting process brings significant benefits in terms of ergonomics, efficiency, flexibility and quality of the end result, thus supporting the aims of making the process simpler, less onerous for the operator and more adaptable to the specific needs. The method according to the invention may also comprise one or more of the technical aspects which will be described below.

In accordance with one aspect, the expression "manual step which can be executed by an operator" means those activities or operations which require the direct intervention of the operator during the cutting process. These manual steps are necessary to manage the workflow effectively and can include different activities.

In accordance with an example, the expression "a manual step which can be executed by an operator" means a step of loading the piece or pack of pieces in the loading station of the machine.

In a further example, the expression "a manual step which can be performed by an operator" means the handling of the piece or pack of pieces: the operator can be involved in the handling of the pieces already cut to prepare them for further processing operations. This could include reinserting the pieces into the loading station or into the unloading station for further cuts, modifying the orientation of the pieces to optimise the subsequent cutting process.

According to one aspect, the logic control unit defines the methods for execution of the at least one manual step which can be executed by an operator as a function of a range of dimensions of the piece or pack of pieces, of a range of weight of the piece or pack of pieces and/or as a function of a number of pieces included in said pack of pieces. For this purpose, the control unit may have a plurality of stored information identifying the technical features of the piece or packs of pieces which must be cut. In other words, the logic control unit defines the methods by which the operator can perform the manual steps, based on critical parameters such as the dimensions, weight and/or the number of pieces inside each pack.

According to an example embodiment, the operator must execute a manual step relating to the handling of a pack of eight pieces intended for the processing station. Depending on the requirements of the cut, there are various loading methods between which the operator can select. Subsequently:
- the eight pieces can be simultaneously loaded as a single pack, optimising the loading time and minimising the process interruptions;
- the eight pieces may be divided into two sub-packs of four pieces each, which can be loaded separately or placed side by side;
- the eight pieces may be divided into four sub-packs of two pieces each, which can be loaded separately or placed alongside each other, in particular, two or more sub-packs simultaneously; and
- the eight pieces may be divided into eight sub-packs of one piece each, which can be loaded separately or placed side by side, in particular, two or more sub-packs simultaneously.

Each option therefore offers a different configuration for loading pieces. This flexibility allows the operator to select the most suitable method according to his/her personal abilities.

According to one aspect, irrespective of how the execution methods are defined, the logic control unit defines the above-mentioned proposed execution methods only if the at least one manual step has actual possible different execution methods. In other words, the logic control unit offers the various methods for executing the manual steps only when there are in fact various options which can be applied by the operator. This means that the control unit, using the user interface, will not have unnecessary or irrelevant choices for the operator, but only those which are actually possible or useful and which allow the processing process to be executed. For example, if a loading operation can be performed in different ways depending on the number, size or weight of the pieces, the logic control unit will provide these options to improve the operational efficiency and better adapt to specific work requirements. If, on the other hand, there are no viable alternatives, the logic control unit will proceed with the predetermined or more suitable option without requiring further interventions by the operator.

According to one aspect, the generation of the cutting pattern may be implemented according to different logics, each of which integrates the interaction of the operator with the logic control unit for optimising the cutting and the manual steps involved.

In accordance with one aspect, as described in more detail below, the selecting step may be performed before the cutting pattern is executed. Alternatively, the selecting step may be performed simultaneously with the execution of the cutting pattern.

According to a first embodiment, the step of generating a cutting pattern is performed before the step of executing the cutting pattern. The cutting pattern generated is an optimised cutting pattern, which defines an optimum execution method of the at least one manual step. The generated cutting pattern is then started. When, according to the cutting pattern being executed, it is the turn of a manual step having actual possible distinct execution methods, using the display device of the user interface, the control logic unit proposes to the operator two or more possible methods for executing the manual step, including the above-mentioned optimum execution method defined by the optimised cutting pattern.

At this point, if the operator, by means of the manual insertion device of the user interface, selects the optimum execution method as the preferred execution method of the manual step, the optimised cutting pattern remains unchanged. Otherwise, if the operator selects a different execution method as the preferred execution method of the manual step, the logic control unit generates a new and different cutting pattern (or code of the cutting pattern) as a function of the different execution method. Obviously, this procedure is repeated for each further manual step which has execution alternatives, thus guaranteeing that the logic control unit continues to propose optimum execution methods for each step. This iterative process will continue until the cutting cycle is completed, ensuring a dynamic and flexible adaptation to the choices of the operator, while at the same time maintaining the efficiency and optimisation of the production process.

In other words, in accordance with the above-mentioned first embodiment, the logic control unit generates an optimised cutting pattern based on an optimum execution method of the at least one manual step. In this configuration, during the selecting step, the operator is presented with various possible execution methods for the manual step, including the optimum option. If the operator selects this optimal method as the preferred method, the cutting pattern generated will match the optimised cutting pattern predefined by the control logic unit. However, if the operator chooses a different execution method as preferred, the logic control unit will adapt the cutting pattern generated for reflecting this choice, creating a new pattern which integrates the different execution method selected by the operator.

The selection therefore occurs simultaneously with the execution of the cutting pattern: the generation of the cutting pattern, the selection of the methods for execution of the at least one manual step and the execution of the cutting pattern are carried out in an interdependent and continuous manner. In practice, the machine starts the execution of the optimised cutting pattern generated by the logic control unit.

According to a second embodiment, the process starts with the logic control unit which proposes to the operator a series of preliminary choices of the manual operating steps, as a function of the above-mentioned criteria (such as the weight range, the size range or the number of pieces for each pack of pieces). These initial choices are used to configure the basic parameters of the cutting pattern. Once the operator's preferences have been collected, the control logic unit generates an optimised cutting pattern that takes into account the limitations and preferences expressed, ensuring that manual steps are adapted to the operator's capabilities and preferences. In this example embodiment, the selecting step is performed before the cutting pattern is executed.

For example, a preliminary choice may relate to a range of weight which the operator is willing to handle in the manual steps of the process. Once the execution method has been selected, therefore, the logic control unit generates a cutting pattern according to the preliminary selection of the execution methods of the at least one manual step.

According to a third embodiment, the two previous approaches are substantially combined. In accordance with this embodiment, the method starts with a preliminary selection in accordance with the second embodiment, where the operator specifies initial preferences and limitations on the methods for executing the at least one manual step. Subsequently, the cutting pattern is further refined using the logic of the first embodiment. In other words, after the preliminary selection, the logic control unit generates a cutting pattern which is executed by the machine tool together with the operator. When a manual step is presented, the logic control unit proposes various methods of execution for the specific manual steps, including optimum methods. The operator can therefore select the preferred execution method for each manual step. If the operator opts for optimal method, the cutting pattern will be highly optimised. If alternative methods are selected, the logic control unit will generate a cutting pattern reflecting these choices, ensuring that the overall process remains flexible and adaptable to the specific needs of the operator.

According to one aspect, the cutting patterns generated by the logic control unit are generated as a function of one or more of the following optimisation criteria: nesting, operating time, wear of the cutting unit, structural characteristics of the material, minimisation of vibrations and/or energy efficiency.

As regards the optimised cutting pattern, it substantially represents the best possible cutting pattern, generated by the logic control unit on the basis of optimisation criteria such as nesting, operating time, wear of the cutting unit, structural characteristics of the material, minimisation of vibrations and energy efficiency.

With regard to the cutting pattern actually generated, if it differs from the optimised cutting pattern, although it is also optimised, it incorporates the compromises necessary to adapt to the requirements of the operator. In technical terms, the cutting pattern generated according to operator preferences is optimised to find a balance between the efficiency of the process and the specific needs of the operator. This means that while the optimised cutting pattern is the result of a rigorous calculation that maximises all optimisation criteria, the cutting pattern generated with operator preferences introduces compromises.

According to one aspect, the method may comprise a step of storing the selection of the preferred execution method and/or the cutting pattern generated as a function of the selection of the preferred execution method.

The storage step is performed simultaneously or after execution of the cutting pattern. In particular, during the selecting step, the preferred execution method stored is proposed to the operator among the two or more possible execution methods proposed by the control unit for generating a subsequent cutting pattern relative to a subsequent cutting process.

Advantageously, during the step of selecting for a new cutting operation, the control unit may propose to the operator the preferred execution method which has been previously stored. This stored method is presented as one of the options among the various available execution methods, thus facilitating the generation of a new cutting pattern. This makes it possible to use the past preferences to further optimise the future production process, reducing the need to reconfigure preferences each time and improving the consistency and operational efficiency.

The expression "subsequent cutting process" means a cutting process which may be different or equal to the previous cutting process. In other words, the expression "subsequent cutting process" means a cutting process which has the aim of achieving a different end product or a cutting process which has the aim of achieving the same end product.

In other words, it means that for generating a cutting pattern for a subsequent cutting process, the logic control unit "U" will propose (among the two or more possible methods for execution of the at least one manual step) the above-mentioned preferred execution method stored, both in the case in which the future cutting process is substantially identical to the previous process and in the case in which the future cutting process is different or only similar.

According to a particularly advantageous example embodiment, the method may comprise a preliminary step of providing to the logic control unit information identifying an operator by means of the device for manually entering information. In particular, during the storing step, the selection of the preferred execution method and/or the cutting pattern generated as a function of the selection of the preferred execution method are uniquely associated with the identification information of the operator. Preferably, in this preliminary step, it comprises a sub-step of checking for the presence of a preferred execution method stored and/or a stored generated cutting pattern uniquely associated with the identification information of the operator: if the presence is confirmed, during the selecting step, the preferred execution method stored is proposed to the operator among the two or more possible execution methods proposed by the logic control unit for generating a subsequent cutting pattern. In other words, the method may include a preliminary step wherein the operator provides identification information to the logic control unit using the manual insertion device. During the storage step, the preferred execution method selected by the operator and/or the cutting pattern generated according to this choice are uniquely associated with the identification information of the operator. During this preliminary step, the logic control unit checks whether there are already preferred execution methods and/or stored cutting patterns which are associated with that specific operator. If such stored data exists, during the selecting step, the preferred execution method stored is proposed to the operator amongst the various options available for generating a subsequent cutting pattern relative to a subsequent cutting process.

Advantageously, this technical feature allows a customisation of the cutting process, adapting to the specific preferences of the operator, which have been previously stored. This not only makes the operator's work easier and consistent with his/her habits, but can also improve operational efficiency by reducing the time needed to re-configure preferences each time.

Advantageously, as explained above, the expression "subsequent cutting process" means a cutting process which may be different or equal to the previous cutting process. In other words, the expression "subsequent cutting process" means a cutting process which has the aim of achieving a different end product or a cutting process which has the aim of achieving the same end product.

In other words, it means that for generating a cutting pattern for a subsequent cutting process, the logic control unit "U" will propose to the operator identified (among the two or more possible methods for execution of the at least one manual step) the above-mentioned preferred execution method stored, both in the case in which the future cutting process is substantially identical to the previous process and in the case in which the future cutting process is different or only similar.

According to an aspect, if the logic control unit is configured for being connected to a remote IT infrastructure, such as, for example, "cloud computing", for transmitting information, the method may comprise a step of transferring identification signals of the preferred execution method stored and/or of the generated cutting pattern stored and/or identification signals of operation of the machine tool.

In other words, the logic control unit can send (or receive) the above-mentioned signals, which contain specific information on the operating preferences and on the operating parameters of the machine, to other systems or machines.

For example, the logic control unit of the machine tool might send signals containing the optimised cutting patterns or the preferred execution methods to another machine tool connected on the Internet, for example by means of the cloud. This allows the second machine to receive and use this data immediately, accelerating the production process and guaranteeing an operating continuity. This is particularly advantageous when an operator uses different machines: the identification of the operator allows the automatic transfer of his/her stored preferences from one machine to another. In this way, even if the operator changes machine tools, the information stored and transferred can be used to quickly configure the new machine according to the preferences of the operator, making the work faster and more efficient.

For example, an operator uses a first machine tool and has stored a preferred execution method and an optimised cutting pattern. When the above-mentioned operator switches to a different machine tool, the logic control unit of the first machine sends signals containing this information to the second machine by means of a cloud system. The second machine receives these signals and is automatically configured according to the preferences of the operator. Consequently, the operator can execute the work without having to manually reset his/her preferences, improving the continuity of the work and reducing the configuration times.

Further features and advantages of the invention are more apparent in the non-limiting description which follows of a non-exclusive embodiment of a method for cutting at least one piece or a pack of pieces, made of wood, plastic, glass, fibreglass which can be operated by a machine tool, in particular a panel saw machine.

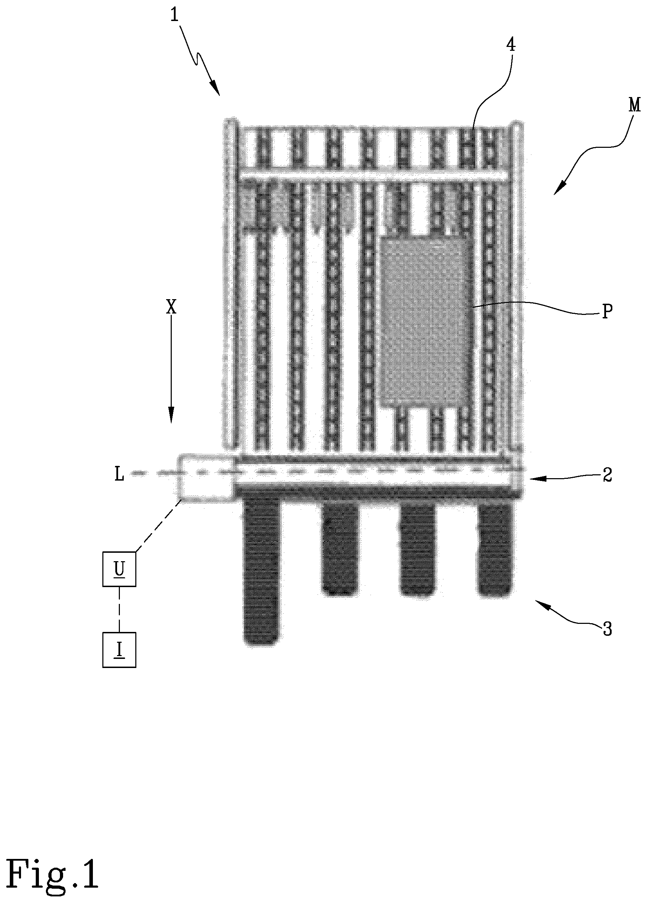

The description is set out below with reference to the accompanying drawing provided solely for purposes of illustration without restricting the scope of the invention: Figure 1 shows a schematic top view of a machine tool, in particular a panel saw machine, configured to perform the method according to this invention.

The method for cutting at least one piece or a pack of pieces is described below according to a relative embodiment with reference to the machine tool "M" used to actuate it.

In this description, the term "pieces" means panels or boards made of wood. Also, the term "packs of pieces" means groups of panels or boards made of wood, in which the panels or boards are stacked on each other to form the packs.

According to the non-limiting example embodiment illustrated in Figure 1, the machine tool "M" is a panel saw machine. The machine tool "M" has a mechanical structure substantially known in the prior art and will not therefore be described in detail below.

The machine tool "M" comprises a loading station 1 and an unloading station 3 for the at least one piece or pack of pieces "P".

The machine tool "M" comprises a processing station 2 comprising a work surface, for resting the at least one piece or a pack of pieces "P", and a cutting unit movable along a cutting line "L" at right angles to a feed direction "X", for cutting the at least one piece or a pack of pieces "P" according to a predetermined cutting pattern.

The machine tool "M" comprises a movement unit 4 for moving the at least one piece or a pack of pieces "P" along the feed direction "X", towards and/or away from the processing station 2.

The machine tool "M" comprises a logic control unit "U" configured for controlling the cutting unit and the movement unit 4. The logic control unit "U" is also configured for generating a cutting pattern to be executed on the at least one piece or pack of pieces "P".

The machine tool "M" comprises a user interface "I", connected to the control logic unit "U" and equipped with a display device and a device for manually entering information.

The machine tool "M" is suitable for performing the method according to this invention.

A preferred embodiment of the method is described below, purely by way of non-limiting example.

According to this embodiment, the method comprises a step of generating a cutting pattern. Preferably, the cutting pattern is an optimised cutting pattern. The cutting pattern defines a sequence of operating steps comprising at least one automated step, which can be executed by means of the movement unit 4 and/or the cutting unit, and at least one manual step, which can be executed by an operator.

In particular, the optimised cutting pattern defines a method of optimum execution of the at least one manual step.

The cutting pattern may be generated as a function of one or more of the following optimisation criteria: nesting, operating time, wear of the cutting unit, structural characteristics of the material, minimisation of vibrations and/or energy efficiency of the process.

This step is performed by the logic control unit "U".

Subsequently, the operator starts the execution of the above-mentioned cutting pattern.

When, according to the cutting pattern being executed, it is the turn of a manual step (such as, for example, a re-insertion of pieces or packs of pieces "P" just cut by the machine tool "M") having actual possible different execution methods, by means of the display device of the user interface "I", the logic control unit "U" proposes to the operator two or more possible methods for executing the manual step, including the above-mentioned optimum execution method defined by the optimised cutting pattern.

At this point, if the operator, by means of the manual information entry device of the user interface "I", selects the optimum execution method as the preferred execution method of the manual step, the optimised cutting pattern remains unchanged.

Alternatively, if the operator, using the manual information entry device of the user interface "I", selects a different execution method as the preferred execution method of the manual step, the logic control unit "U" generates a new cutting pattern as a function of the different execution method. This new cutting pattern is different from the previous optimised cutting pattern. Obviously, the new cutting pattern and the previous cutting pattern achieve the same result but comprise divergent steps.

The operator executes the manual step in accordance with the preferred execution method, continuing with the execution of the new cutting pattern.

If the remaining steps of the new cutting pattern are automated steps, the machine tool "M" continues the cutting operations until completion of the new cutting pattern.

If, on the other hand, the new cutting pattern has a further manual step having actual possible different execution methods, the selection step is repeated. In other words, the logic control unit "U" proposes to the operator two or more possible methods for execution of the further manual step, including the above-mentioned optimum execution method defined by the new cutting pattern. Depending on the selected execution method, the current cutting pattern will be kept unchanged or a new cutting pattern will be generated.

Obviously, this procedure is repeated for each further manual step which have execution alternatives, thus guaranteeing that the logic control unit "U" continues to propose optimum execution methods for each manual step. This iterative process will continue until the cycle for cutting the pieces or packs of pieces "P" is completed, ensuring a dynamic and flexible adaptation to operator choices while at the same time maintaining the efficiency and optimisation of the production process.

According to one aspect, the method comprises a step of storing the selection of the preferred execution method and/or the cutting pattern generated as a function of the selection of the preferred execution method: the storing step is performed simultaneously with or after the execution of the cutting pattern. in particular, during the selecting step, the preferred execution method stored is proposed to the operator among the two or more possible execution methods proposed by the logic control unit "U" for generating a subsequent cutting pattern. In other words, during the selecting step, the logic control unit "U" proposes to the operator the preferred execution method, previously stored, amongst the various possible execution methods available. This proposal is used to generate a subsequent cutting pattern, ensuring continuity and optimisation in the production process.

The expression "subsequent cutting process" means a cutting process which may be different or equal to the previous cutting process. In other words, the expression "subsequent cutting process" means a cutting process which has the aim of achieving a different end product or a cutting process which has the aim of achieving the same end product.

In other words, it means that for generating a cutting pattern for a subsequent cutting process, the logic control unit "U" will propose (among the two or more possible methods for execution of the at least one manual step) the above-mentioned preferred execution method stored, both in the case in which the future cutting process is substantially identical to the previous process and in the case in which the future cutting process is different or only similar.

Advantageously, the method also comprises a preliminary step of providing the logic control unit "U" with information identifying an operator by means of the device for manually entering information. In particular, during the storing step, the selection of the preferred execution method and/or the cutting pattern generated as a function of the selection of the preferred execution method are uniquely associated with the identification information of the operator.

Preferably, this preliminary step comprises a sub-step of checking for the presence of a preferred execution method stored and/or a stored generated cutting pattern uniquely associated with the identification information of the operator: if the presence is confirmed, during the selecting step, the preferred execution method stored is proposed to the operator among the two or more possible execution methods proposed by the logic control unit "U" for generating a subsequent cutting pattern. In other words, the method may include a preliminary step wherein the operator provides identification information to the logic control unit "U" by means of the manual insertion device. During this preliminary step, the logic control unit "U" checks whether there are already preferred execution methods and/or stored cutting patterns which are associated with that specific operator. If such stored data exists, during the selecting step, the preferred execution method stored is proposed to the operator among the various options available for generating a future cutting pattern correlated to a future cutting process.

In accordance with an aspect, the logic control unit "U" is configured for being connected to a remote IT infrastructure, such as, for example "cloud computing", for transmitting information. In accordance with this embodiment, the method comprises a step of transferring identification signals of the preferred execution method stored and/or of the generated cutting pattern stored and/or identification signals of operation of the machine tool "M".

Advantageously, the method may therefore comprise a preliminary step wherein the machine tool "M" is connected to the remote IT infrastructure so that the logic control unit "U" can receive identification signals, and therefore information, relating to preferred execution methods stored for cutting cycles performed previously. This feature is particularly advantageous if the identification signals are uniquely associated with an operator.

The present invention achieves the preset aims, overcoming the drawbacks of the prior art.

## Claims

1. A method for cutting at least one piece or a pack of pieces (P), operable using a machine tool (M), in particular a panel saw machine, said method comprising the following steps:
- a step of generating a cutting pattern to be executed on said at least one piece or a pack of pieces (P) using a logic control unit (U) of said machine tool (M); said cutting pattern defining a sequence of operating steps comprising at least one automated step, which can be executed by a movement unit (4) and/or a cutting unit of said machine tool (M), and at least one manual step, which can be executed by an operator;
- a step of executing said cutting pattern by means of said operator, said movement unit (4) and/or said cutting unit;
**characterised in that** said step of generating the cutting pattern is actuated as a function of a step of selecting a preferred execution method of said at least one manual step among two or more possible execution methods proposed by said logic control unit (U) to said operator using a display device of said machine tool (M); said selection being performed using a device for manually entering information of said machine tool (M).

2. The method according to claim 1, wherein said logic control unit (U) defines said proposed execution methods only if said at least one manual step has different execution methods which can be actuated.

3. The method according to claim 2, wherein said step of generating a cutting pattern is performed before said step of executing the cutting pattern and wherein said cutting pattern generated is an optimised cutting pattern, said optimised cutting pattern defining a method for optimum execution of said at least one manual step.

4. The method according to claim 3 when it depends on claim 2, wherein, in said selection step, said optimum execution method of said at least one manual step is proposed to said operator among the two or more possible execution methods proposed by said logic control unit (U):
if said operator selects said optimum execution method as a preferred execution method of said at least one manual step, said optimised cutting pattern remains unchanged;
if the operator selects a different execution method as a preferred execution method of said at least one manual step, said logic control unit (U) generates a new cutting pattern as a function of said different execution method; said new cutting pattern being separate from said optimised cutting pattern.

5. The method according to claim 4, wherein said new cutting pattern has at least a further manual step and wherein said cutting pattern defines an optimum execution method for each of said at least one further manual step;
said selection step is repeated for said at least one further manual step if said at least one further manual step has actual possible different execution methods.

6. The method according to any one of the preceding claims, wherein said logic control unit (U) defines said proposed execution methods as a function of a range of dimensions of said piece or pack of pieces (P), of a range of weight of said piece or pack of pieces (P) and/or as a function of a number of pieces included in said pack of pieces (P).

7. The method according to any one of the preceding claims, wherein said selecting step is performed before said cutting pattern is executed.

8. The method according to any one of the preceding claims 1 to 6, wherein said selecting step is performed simultaneously with the execution of said cutting pattern.

9. The method according to any one of the preceding claims, comprising a step of storing said selection of said preferred execution method and/or of the cutting pattern generated as a function of the selection of said preferred execution method; said storage step being performed simultaneously with or after the execution of said cutting pattern.

10. The method according to claim 9, wherein in said selecting step, said preferred execution method stored is proposed to said operator among the two or more possible execution methods proposed by said logic control unit (U) for generating a subsequent cutting pattern relative to a subsequent cutting process.

11. The method according to claim 9 or 10, wherein said method comprises a preliminary step of providing to said logic control unit (U) information identifying an operator using said device for manually entering information,
and wherein in the storing step, the selection of the preferred execution method and/or the cutting pattern generated as a function of the selection of the preferred execution method are uniquely associated with said identification information of said operator.

12. The method according to claim 11 when it depends on claim 9, wherein said preliminary step of providing information to said logic control unit (U) identifying a predetermined operator using said device for manually entering information comprises a sub-step of checking for the presence of a preferred stored execution method associated uniquely with said identification information of said operator;
if said presence is confirmed, during said selecting step, said preferred execution method stored is proposed to said operator among the two or more possible execution methods proposed by said logic control unit (U) for generating a subsequent cutting pattern relative to a subsequent cutting process.

13. The method according to any one of the preceding claims, wherein said at least one manual step which can be executed by an operator is a step of inserting in the machine tool (M) said piece or pack of pieces (P) and/or a step of reinserting in the machine tool (M) a piece or pack of pieces (P).

14. The method according to any one of claims 9 to 13, wherein said logic control unit (U) is configured for being connected to a remote IT infrastructure, such as, for example, "cloud computing", for transmitting information; and
wherein said method comprises a step of transferring identification signals of the preferred execution method stored and/or of the generated cutting pattern stored and/or identification signals of operation of said machine tool (M).

15. A machine tool (M) for cutting at least one piece or a pack of pieces (P), in particular a panel saw machine, comprising:
- at least one loading station (1) and at least one unloading station (3) of said at least one piece or a pack of pieces (P);
- a processing station (2) comprising a work surface, for resting said at least one piece or a pack of pieces (P), and a cutting unit movable along a cutting line (L) at right angles to a feed direction (X), for cutting said at least one piece or a pack of pieces (P) according to a predetermined cutting pattern,
- a movement unit (4) for moving said at least one piece or a pack of pieces along said feed direction (X), towards and/or away from said processing station (2),
- a logic control unit (U), configured for controlling said cutting unit and said movement unit (4); said logic control unit (U) being configured for generating a cutting pattern to be executed on said at least one piece or a pack of pieces (P);
- a user interface (I), connected to said control logic unit (U) and equipped with a display device and a device for manually entering information;
**characterised in that** said machine tool (M) is configured to operate a method for cutting at least one piece or a pack of pieces according to any one of the preceding claims.

## Patentansprüche

1. Verfahren zum Schneiden mindestens eines Stücks oder eines Satzes von Stücken (P), das mit einer Werkzeugmaschine (M), insbesondere einer Plattensägemaschine, durchgeführt werden kann, wobei das Verfahren die folgenden Schritte umfasst:
- einen Schritt zum Erzeugen eines Schnittmusters, das an dem mindestens einen Stück oder einem Satz von Stücken (P) unter Verwendung einer logischen Steuereinheit (U) der Werkzeugmaschine (M) ausgeführt werden soll; wobei das Schnittmuster eine Abfolge von Betriebsschritten definiert, die mindestens einen automatisierten Schritt, der von einer Bewegungseinheit (4) und/oder einer Schneideinheit der Werkzeugmaschine (M) ausgeführt werden kann, und mindestens einen manuellen Schritt, der von einem Bediener ausgeführt werden kann, umfasst;
- einen Schritt zum Ausführen des Schnittmusters mittels des Bedieners, der Bewegungseinheit (4) und/oder der Schneideinheit;
**dadurch gekennzeichnet, dass** der Schritt zum Erzeugen des Schnittmusters in Abhängigkeit von einem Schritt zum Auswählen eines bevorzugten Ausführungsverfahrens des mindestens einen manuellen Schritts aus zwei oder mehr möglichen Ausführungsverfahren, die von der logischen Steuereinheit (U) dem Bediener unter Verwendung einer Anzeigevorrichtung der Werkzeugmaschine (M) vorgeschlagen werden, aktiviert wird; wobei die Auswahl unter Verwendung einer Vorrichtung zur manuellen Eingabe von Informationen der Werkzeugmaschine (M) durchgeführt wird.

2. Verfahren nach Anspruch 1, wobei die logische Steuereinheit (U) die vorgeschlagenen Ausführungsverfahren nur dann definiert, wenn der mindestens eine manuelle Schritt unterschiedliche Ausführungsverfahren aufweist, die aktiviert werden können.

3. Verfahren nach Anspruch 2, wobei der Schritt zum Erzeugen eines Schnittmusters vor dem Schritt zum Ausführen des Schnittmusters durchgeführt wird und wobei das erzeugte Schnittmuster ein optimiertes Schnittmuster ist, wobei das optimierte Schnittmuster ein Verfahren zur optimalen Ausführung des mindestens einen manuellen Schritts definiert.

4. Verfahren nach Anspruch 3, wenn abhängig von Anspruch 2, wobei im Auswahlschritt das optimale Ausführungsverfahren des mindestens einen manuellen Schritts aus den zwei oder mehr möglichen Ausführungsverfahren dem Bediener vorgeschlagen wird, die von der logischen Steuereinheit (U) vorgeschlagen werden:
wenn der Bediener das optimale Ausführungsverfahren als bevorzugtes Ausführungsverfahren des mindestens einen manuellen Schritts auswählt, bleibt das optimierte Schnittmuster unverändert;
wenn der Bediener ein anderes Ausführungsverfahren als bevorzugtes Ausführungsverfahren des mindestens einen manuellen Schritts auswählt, erzeugt die logische Steuereinheit (U) ein neues Schnittmuster in Abhängigkeit von dem anderen Ausführungsverfahren; wobei das neue Schnittmuster von dem optimierten Schnittmuster getrennt ist.

5. Verfahren nach Anspruch 4, wobei das neue Schnittmuster mindestens einen weiteren manuellen Schritt aufweist und wobei das Schnittmuster ein optimales Ausführungsverfahren für jeden des mindestens einen weiteren manuellen Schritts definiert;
wobei der Auswahlschritt für den mindestens einen weiteren manuellen Schritt wiederholt wird, wenn der mindestens eine weitere manuelle Schritt tatsächlich mögliche unterschiedliche Ausführungsverfahren aufweist.

6. Verfahren nach einem der vorhergehenden Ansprüche, wobei die logische Steuereinheit (U) die vorgeschlagenen Ausführungsverfahren in Abhängigkeit von einem Abmessungsbereich des Stücks oder des Satzes von Stücken (P), von einem Gewichtsbereich des Stücks oder des Satzes von Stücken (P) und/oder in Abhängigkeit von einer Anzahl von Stücken, die in dem Satz von Stücken (P) enthalten sind, definiert.

7. Verfahren nach einem der vorhergehenden Ansprüche, wobei der Auswahlschritt durchgeführt wird, bevor das Schnittmuster ausgeführt wird.

8. Verfahren nach einem der vorhergehenden Ansprüche 1 bis 6, wobei der Auswahlschritt gleichzeitig mit der Ausführung des Schnittmusters durchgeführt wird.

9. Verfahren nach einem der vorhergehenden Ansprüche, umfassend einen Schritt zum Speichern der Auswahl des bevorzugten Ausführungsverfahrens und/oder des Schnittmusters, das in Abhängigkeit von der Auswahl des bevorzugten Ausführungsverfahrens erzeugt wird; wobei der Speicherschritt gleichzeitig mit oder nach der Ausführung des Schnittmusters durchgeführt wird.

10. Verfahren nach Anspruch 9, wobei im Auswahlschritt das gespeicherte bevorzugte Ausführungsverfahren aus den zwei oder mehr möglichen Ausführungsverfahren dem Bediener vorgeschlagen wird, die von der logischen Steuereinheit (U) zum Erzeugen eines anschließenden Schnittmusters relativ zu einem anschließenden Schneidprozess vorgeschlagen werden.

11. Verfahren nach Anspruch 9 oder 10, wobei das Verfahren einen vorbereitenden Schritt zum Bereitstellen von Informationen an die logische Steuereinheit (U) umfasst, die einen Bediener identifizieren, der die Vorrichtung zur manuellen Eingabe von Informationen verwendet,
und wobei im Speicherschritt die Auswahl des bevorzugten Ausführungsverfahrens und/oder das in Abhängigkeit von der Auswahl des bevorzugten Ausführungsverfahrens erzeugte Schnittmuster eindeutig mit den Identifizierungsinformationen des Bedieners assoziiert sind.

12. Verfahren nach Anspruch 11, wenn abhängig von Anspruch 9, wobei der vorbereitende Schritt zum Bereitstellen von Informationen an die logische Steuereinheit (U), die einen vorbestimmten Bediener identifizieren, der die Vorrichtung zur manuellen Eingabe von Informationen verwendet, einen Unterschritt zum Prüfen des Vorhandenseins eines gespeicherten bevorzugten Ausführungsverfahrens umfasst, das eindeutig mit den Identifizierungsinformationen des Bedieners assoziiert ist;
wenn das Vorhandensein bestätigt wird, während des Auswahlschritts wird das gespeicherte bevorzugte Ausführungsverfahren aus den zwei oder mehr möglichen Ausführungsverfahren dem Bediener vorgeschlagen, die von der logischen Steuereinheit (U) zum Erzeugen eines anschließenden Schnittmusters relativ zu einem anschließenden Schneidprozess vorgeschlagen werden.

13. Verfahren nach einem der vorhergehenden Ansprüche, wobei der mindestens eine manuelle Schritt, der von einem Bediener ausgeführt werden kann, ein Schritt zum Einlegen des Stücks oder des Satzes von Stücken (P) in die Werkzeugmaschine (M) und/oder ein Schritt zum erneuten Einlegen eines Stücks oder eines Satzes von Stücken (P) in die Werkzeugmaschine (M) ist.

14. Verfahren nach einem der Ansprüche 9 bis 13, wobei die logische Steuereinheit (U) so ausgelegt ist, dass sie zum Übermitteln von Informationen mit einer Fern-IT-Infrastruktur, wie beispielsweise "Cloud Computing", verbunden werden kann; und
wobei das Verfahren einen Schritt zum Übertragen von Identifizierungssignalen des gespeicherten bevorzugten Ausführungsverfahrens und/oder des gespeicherten erzeugten Schnittmusters und/oder von Identifizierungssignalen des Betriebs der Werkzeugmaschine (M) umfasst.

15. Werkzeugmaschine (M) zum Schneiden mindestens eines Stücks oder eines Satzes von Stücken (P), insbesondere eine Plattensägemaschine, umfassend:
- mindestens eine Ladestation (1) und mindestens eine Entladestation (3) für das mindestens eine Stück oder einen Satz von Stücken (P);
- eine Verarbeitungsstation (2), umfassend eine Arbeitsoberfläche zum Auflegen des mindestens einen Stücks oder eines Satzes von Stücken (P) sowie eine entlang einer Schnittlinie (L) im rechten Winkel zu einer Zuführungsrichtung (X) bewegbare Schneideinheit zum Schneiden des mindestens einen Stücks oder eines Satzes von Stücken (P) nach einem vorbestimmten Schnittmuster,
- eine Bewegungseinheit (4) zum Bewegen des mindestens einen Stücks oder eines Satzes von Stücken entlang der Zuführungsrichtung (X) hinführend zur Verarbeitungsstation (2) und/oder von dieser wegführend,
- eine logische Steuereinheit (U), die so ausgelegt ist, dass sie die Schneideinheit und die Bewegungseinheit (4) steuert; wobei die logische Steuereinheit (U) so ausgelegt ist, dass sie ein Schnittmuster erzeugt, das an dem mindestens einen Stück oder einem Satz von Stücken (P) ausgeführt werden soll;
- eine Benutzerschnittstelle (I), die mit der logischen Steuereinheit (U) verbunden und mit einer Anzeigevorrichtung sowie einer Vorrichtung zur manuellen Eingabe von Informationen ausgestattet ist;
**dadurch gekennzeichnet, dass** die Werkzeugmaschine (M) so ausgelegt ist, dass sie ein Verfahren zum Schneiden mindestens eines Stücks oder eines Satzes von Stücken nach einem der vorhergehenden Ansprüche durchführt.

## Revendications

1. Procédé pour la coupe d'au moins une pièce ou d'un paquet de pièces (P), pouvant être mis en œuvre à l'aide d'une machine-outil (M), en particulier d'une machine de sciage de panneaux, ledit procédé comprenant les étapes suivantes :
- une étape consistant à générer un motif de coupe à exécuter sur ladite au moins une pièce ou un paquet de pièces (P) à l'aide d'une unité de commande logique (U) de ladite machine-outil (M) ; ledit motif de coupe définissant une séquence d'étapes opérationnelles comprenant au moins une étape automatisée, pouvant être exécutée par une unité de déplacement (4) et/ou une unité de coupe de ladite machine-outil (M), et au moins une étape manuelle, pouvant être exécutée par un opérateur ;
- une étape consistant à exécuter ledit motif de coupe au moyen dudit opérateur, de ladite unité de déplacement (4) et/ou de ladite unité de coupe ;
**caractérisé en ce que** ladite étape de génération du motif de coupe est déclenchée en fonction d'une étape de sélection d'un mode d'exécution préféré de ladite au moins une étape manuelle parmi deux ou plusieurs modes d'exécution possibles proposés par ladite unité de commande logique (U) audit opérateur à l'aide d'un dispositif d'affichage de ladite machine-outil (M) ; ladite sélection étant effectuée à l'aide d'un dispositif pour saisir manuellement des informations de ladite machine-outil (M).

2. Procédé selon la revendication 1, dans lequel ladite unité de commande logique (U) définit lesdits modes d'exécution proposés uniquement si ladite au moins une étape manuelle comporte différents modes d'exécution pouvant être déclenchés.

3. Procédé selon la revendication 2, dans lequel ladite étape de génération d'un motif de coupe est effectuée avant ladite étape d'exécution du motif de coupe et dans lequel ledit motif de coupe généré est un motif de coupe optimisé, ledit motif de coupe optimisé définissant un mode d'exécution optimal de ladite au moins une étape manuelle.

4. Procédé selon la revendication 3 lorsqu'elle dépend de la revendication 2, dans lequel, lors de ladite étape de sélection, ledit mode d'exécution optimal de ladite au moins une étape manuelle est proposé audit opérateur parmi les deux ou plusieurs modes d'exécution possibles proposés par ladite unité de commande logique (U) :
si ledit opérateur sélectionne ledit mode d'exécution optimal comme mode d'exécution préféré de ladite au moins une étape manuelle, ledit motif de coupe optimisé reste inchangé ;
si l'opérateur sélectionne un mode d'exécution différent comme mode d'exécution préféré de ladite au moins une étape manuelle, ladite unité de commande logique (U) génère un nouveau motif de coupe en fonction dudit mode d'exécution différent ; ledit nouveau motif de coupe étant séparé dudit motif de coupe optimisé.

5. Procédé selon la revendication 4, dans lequel ledit nouveau motif de coupe comporte au moins une étape manuelle supplémentaire et dans lequel ledit motif de coupe définit un mode d'exécution optimal pour chacune desdites au moins une étape manuelle supplémentaire ; ladite étape de sélection est répétée pour ladite au moins une étape manuelle supplémentaire si ladite au moins une étape manuelle supplémentaire comporte différents modes d'exécution possibles effectifs.

6. Procédé selon l'une quelconque des revendications précédentes, dans lequel ladite unité de commande logique (U) définit lesdits modes d'exécution proposés en fonction d'une plage de dimensions de ladite pièce ou dudit paquet de pièces (P), d'une plage de poids de ladite pièce ou dudit paquet de pièces (P) et/ou en fonction d'un nombre de pièces incluses dans ledit paquet de pièces (P).

7. Procédé selon l'une quelconque des revendications précédentes, dans lequel ladite étape de sélection est effectuée avant l'exécution dudit motif de coupe.

8. Procédé selon l'une quelconque des revendications précédentes 1 à 6, dans lequel ladite étape de sélection est effectuée simultanément à l'exécution dudit motif de coupe.

9. Procédé selon l'une quelconque des revendications précédentes, comprenant une étape consistant à mémoriser ladite sélection dudit mode d'exécution préféré et/ou du motif de coupe généré en fonction de la sélection dudit mode d'exécution préféré ; ladite étape de mémorisation étant effectuée simultanément à l'exécution dudit motif de coupe ou après celle-ci.

10. Procédé selon la revendication 9, dans lequel, lors de ladite étape de sélection, ledit mode d'exécution préféré mémorisé est proposé audit opérateur parmi les deux ou plusieurs modes d'exécution possibles proposés par ladite unité de commande logique (U) pour générer un motif de coupe ultérieur relatif à un processus de coupe ultérieur.

11. Procédé selon la revendication 9 ou 10, dans lequel ledit procédé comprend une étape préliminaire consistant à fournir à ladite unité de commande logique (U) des informations identifiant un opérateur utilisant ledit dispositif pour saisir manuellement des informations, et dans lequel, lors de l'étape de mémorisation, la sélection du mode d'exécution préféré et/ou le motif de coupe généré en fonction de la sélection du mode d'exécution préféré sont associés de manière unique auxdites informations d'identification dudit opérateur.

12. Procédé selon la revendication 11 lorsqu'elle dépend de la revendication 9, dans lequel ladite étape préliminaire consistant à fournir à ladite unité de commande logique (U) des informations identifiant un opérateur prédéterminé utilisant ledit dispositif pour saisir manuellement des informations comprend une sous-étape consistant à contrôler la présence d'un mode d'exécution préféré mémorisé, associé de manière unique auxdites informations d'identification dudit opérateur ; si ladite présence est confirmée, au cours de ladite étape de sélection, ledit mode d'exécution préféré mémorisé est proposé audit opérateur parmi les deux ou plusieurs modes d'exécution possibles proposés par ladite unité de commande logique (U) pour générer un motif de coupe ultérieur relatif à un processus de coupe ultérieur.

13. Procédé selon l'une quelconque des revendications précédentes, dans lequel ladite au moins une étape manuelle pouvant être exécutée par un opérateur est une étape consistant à insérer dans la machine-outil (M) ladite pièce ou ledit paquet de pièces (P) et/ou une étape consistant à réinsérer dans la machine-outil (M) une pièce ou un paquet de pièces (P).

14. Procédé selon l'une quelconque des revendications 9 à 13, dans lequel ladite unité de commande logique (U) est configurée pour être connectée à une infrastructure informatique distante, telle que, par exemple, l'informatique en nuage, afin de transmettre des informations ; et
dans lequel ledit procédé comprend une étape consistant à transférer des signaux d'identification du mode d'exécution préféré mémorisé et/ou du motif de coupe généré mémorisé et/ou des signaux d'identification du fonctionnement de ladite machine-outil (M).

15. Machine-outil (M) pour la coupe d'au moins une pièce ou d'un paquet de pièces (P), en particulier une machine de sciage de panneaux, comprenant :
- au moins un poste de chargement (1) et au moins un poste de déchargement (3) de ladite au moins une pièce ou d'un paquet de pièces (P) ;
- une poste de traitement (2) comprenant une surface de travail, destinée à recevoir ladite au moins une pièce ou un paquet de pièces (P), et une unité de coupe mobile le long d'une ligne de coupe (L) perpendiculaire à une direction d'alimentation (X), destinée à couper ladite au moins une pièce ou un paquet de pièces (P) selon un motif de coupe prédéterminé,
- une unité de déplacement (4) destinée à rapprocher et/ou à éloigner ladite au moins une pièce ou un paquet de pièces le long de ladite direction d'alimentation (X) dudit poste de traitement (2),
- une unité de commande logique (U), configurée pour commander ladite unité de coupe et ladite unité de déplacement (4) ; ladite unité de commande logique (U) étant configurée pour générer un motif de coupe à exécuter sur ladite au moins une pièce ou un paquet de pièces (P) ;
- une interface utilisateur (I), reliée à ladite unité de commande logique (U) et équipée d'un dispositif d'affichage et d'un dispositif pour saisir manuellement des informations ;
**caractérisée en ce que** ladite machine-outil (M) est configurée pour mettre en œuvre un procédé pour la coupe d'au moins une pièce ou d'un paquet de pièces selon l'une quelconque des revendications précédentes.
